# EUROPÄISCHE PATENTSCHRIFT

(11) **EP 3 351 472 B1**
(45) Veröffentlichungstag und Bekanntmachung des Hinweises auf die Patenterteilung: **12.05.2021**
(21) Anmeldenummer: 18152705.2
(22) Anmeldetag: 22.01.2018
(51) Int. Cl.: B63H 23/24, B63H 21/17, B60K 6/26

(54) **VORRICHTUNG ZUM BEREITSTELLEN ELEKTRISCHER ENERGIE FÜR EINEN ELEKTRISCHEN VERBRAUCHER UND/ODER ZUM LADEN EINER BATTERIE IN EINEM BOOT**
DEVICE FOR PROVIDING ELECTRICAL ENERGY FOR AN ELECTRICAL CONSUMER AND/OR FOR CHARGING A BATTERY IN A BOAT
DISPOSITIF DESTINÉ À FOURNIR DE L'ÉNERGIE ÉLECTRIQUE POUR UN CONSOMMATEUR ÉLECTRIQUE ET/OU À CHARGER UNE BATTERIE DANS UN BATEAU

(30) Priorität: 20.01.2017 DE 102017101145
(43) Veröffentlichungstag der Anmeldung: 25.07.2018
(73) Patentinhaber: Torqeedo GmbH, 82205 Gilching (DE)
(72) Erfinder: Biebach, Jens, 82327 Tutzing (DE)
(74) Vertreter: Nordmeyer, Philipp Werner

(56) Entgegenhaltungen:
- EP-A1- 2 433 841
- WO-A1-2016/084799
- JP-A- 2010 173 390
- US-A1- 2011 237 141
- XI ZHANG ET AL: "Integrated Design of Powertrain Controllers in Series Hybrid Electric Vehicles for Efficiency Enhancement and Battery Lifetime Extension", WORLD ELECTRIC VEHICLE JOURNAL, Bd. 3, Nr. 4, 25. Dezember 2009 (2009-12-25), Seiten 843-848, XP055506914, ISSN: 2032-6653, DOI: 10.3390/wevj3040843
- Anonymous: "Lichtmaschine - Wikipedia", , 3 January 2017 (2017-01-03), XP055677285, Retrieved from the Internet: URL:https://de.wikipedia.org/w/index.php?t itle=Lichtmaschine&oldid=161218437 [retrieved on 2020-03-17]

## Beschreibung

### Technisches Gebiet

Die vorliegende Erfindung betrifft ein Boot mit einem Bordsystem.

### Technischer Hintergrund

Es ist bekannt, zum Bereitstellen von elektrischer Energie in einem Bordnetz eines Boots einen Generator bereitzustellen, welcher über einen Verbrennungsmotor angetrieben wird. Es werden dabei je nach Anforderung Gleichstromgeneratoren oder Wechselstromgeneratoren verwendet, welche das Bordnetz entsprechend mit elektrischer Energie versorgen.

Da es je nach Belastung des Bordnetzes durch unterschiedliche elektrische Verbraucher zu starken Schwankungen des Energiebedarfs kommen kann, kann es bei herkömmlichen Vorrichtungen zur Bereitstellung elektrischer Energie in einem Boot, welche einen mit einem Verbrennungsmotor angetriebenen Generator aufweisen, dazu kommen, dass der Verbrennungsmotor nicht in seinem optimalen Betriebspunkt betrieben wird und entsprechend die Effizienz der Umwandlung des Kraftstoffs in elektrische Energie absinkt.

Dies ist insbesondere dann der Fall, wenn der mit dem Verbrennungsmotor verbundene Generator in dem Boot dafür verwendet wird, Akkumulatoren beziehungsweise Batterien innerhalb des Bordstromnetzes aufzuladen beziehungsweise nachzuladen. Beim Laden von Batterien kommt es nach der Hauptladephase, in welcher die Ladung mit einem konstanten (Maximal-)Strom betrieben wird, in einer Nachladephase dazu, dass die Ladung bei einer konstanten Ladenennspannung durchgeführt wird und der Strom immer weiter absinkt. Wird hierfür die elektrische Energie über einen Generator bereitgestellt, wird der Generator in einem Bereich geringer Effizienz betrieben. Die GB 2 417 378 A schlägt zur Lösung ein generatorbetriebenes Batterieladegerät vor, bei welchem die Drehzahl des Verbrennungsmotors so gesteuert wird, dass der Generator sequentielle Ladestrompulse der zu ladenden Batterie zuführt. Es wird entsprechend nur die Drehzahl des Verbrennungsmotors gesteuert, um den Ladestrom, der durch den Gleichstromgenerator erzeugt wird, zu variieren. Durch die notwendige Variation der Drehzahl wird der Verbrennungsmotor aber nur selten in seinem Effizienzmaximum betrieben.

Weiterer Stand der Technik ist bekannt aus dem Artikel von XI ZHANG ET AL: "Integrated Design of Powertrain Controllers in Series Hybrid Electric Vehicles for Efficiency Enhancement and Battery Lifetime Extension", WORLD ELECTRIC VEHICLE JOURNAL, Bd. 3, Nr. 4, 25. Dezember 2009 (2009-12-25), Seiten 843-848, XP055506914, ISSN: 2032-6653, DOI: 10.3390/wevj3040843

Weiterer Stand der Technik ist bekannt aus EP2433841 und EP2321172.

### Darstellung der Erfindung

Ausgehend von dem bekannten Stand der Technik ist es eine Aufgabe der vorliegenden Erfindung, eine Vorrichtung zum Bereitstellen elektrischer Energie für einen elektrischen Verbraucher und/oder zum Laden einer Batterie in einem Boot bereitzustellen, welche einen weiter verbesserten Aufbau bereitstellt.

Diese Aufgabe wird durch eine Vorrichtung mit den Merkmalen des Anspruchs 1 gelöst. Vorteilhafte Weiterbildungen ergeben sich aus den Unteransprüchen, der vorliegenden Beschreibung sowie den Figuren.

Entsprechend wird eine Vorrichtung zum Bereitstellen elektrischer Energie für einen elektrischen Verbraucher und/oder zum Laden einer Batterie und/oder Batteriebank in einem mit einem Elektromotor angetriebenen Boot, wobei die Vorrichtung einen Verbrennungsmotor mit einer Motorregeleinrichtung zum Regeln des Verbrennungsmotors und einen mit dem Verbrennungsmotor gekoppelten Gleichstromgenerator mit einer Generatorregeleinrichtung zum Regeln des Gleichstromgenerators umfasst, wobei eine Steuervorrichtung vorgesehen ist, die dazu eingerichtet ist, der Motorregeleinrichtung eine Motorführungsgröße und/oder der Generatorregeleinrichtung eine Generatorführungsgröße vorzugeben. Die Steuervorrichtung ist dazu eingerichtet, den Verbrennungsmotor auf der Grundlage der Motorführungsgröße und den Gleichstromgenerator auf der Grundlage der Generatorführungsgröße in einem Bereich unabhängig voneinander zu regeln

Dadurch, dass sowohl der Verbrennungsmotor mit einer Motorregeleinrichtung zum Regeln des Verbrennungsmotors auf Grundlage einer Motorführungsgröße und der Generator ebenfalls eine Generatorregeleinrichtung zum Regeln des Generators auf Grundlage einer Generatorregelgröße aufweist, ist es möglich, sowohl den Generator als auch den Verbrennungsmotor in einem gewissen Grad unabhängig voneinander zu regeln und auf diese Weise die Bereitstellung der elektrischen Energie noch effizienter zu gestalten.

Insbesondere ist es mittels der Steuervorrichtung möglich, die entsprechenden Motorführgrößen und Generatorführgrößen für den Verbrennungsmotor und den Generator so vorzugeben, dass unter Berücksichtigung des jeweiligen Aufbaus der Vorrichtung und der Charakteristika der jeweiligen Komponenten ein besonders effizienter Betrieb erreicht werden kann und gleichzeitig die elektrische Energie in der benötigten Form zuverlässig bereitgestellt werden kann.

Über die Regelung des Generators anhand einer Generatorführgröße kann dabei entsprechend erreicht werden, dass beispielsweise die vom Generator bereitgestellte Spannung im Bordnetz oder der vom Generator bereitgestellte Strom im Bordnetz entsprechend der Vorgaben konstant gehalten werden kann, ohne in einem gewissen Rahmen das Verhalten des Verbrennungsmotors berücksichtigen zu müssen.

Weiterhin kann im gleichen Zusammenhang auch ein effizienter Betrieb des Verbrennungsmotors an einem vorgegebenen Betriebspunkt erreicht werden - beispielsweise bei seiner höchsten Effizienz - und die Generatorregelung sorgt dennoch dafür, dass im Bordnetz die gewünschte Spannung oder der gewünschte Strom vorliegt.

Bevorzugt übergibt die Steuervorrichtung der Motorregeleinrichtung als Motorführungsgröße eine Leistungsvorgabe und/oder eine Betriebspunktvorgabe und/oder eine Drehzahlvorgabe und/oder eine Drehmomentvorgabe und/oder die Steuervorrichtung übergibt bevorzugt der Generatorregeleinrichtung des Generators als Generatorführungsgröße eine Spannungsvorgabe und/oder eine Stromvorgabe und/oder eine Leistungsvorgabe und/oder eine Batteriestromvorgabe und/oder eine Batteriespannungsvorgabe und/oder eine Batterieleistungsvorgabe und/oder eine und/oder eine Batterieleistungsvorgabe und/oder eine Zwischenkreisspannungsvorgabe und/oder eine Zwischenkreisstromvorgabe und/oder eine Zwischenkreisleistungsvorgabe und/oder die Steuervorrichtung übergibt bevorzugt der Generatorregeleinrichtung als Generatorführungsgröße eine Leistungsvorgabe und/oder eine Betriebspunktvorgabe und/oder eine Drehzahlvorgabe und/oder eine Drehmomentvorgabe.

Dieser Betriebsmodus kann insbesondere dann von Vorteil sein, wenn aufgrund der Ausbildung beziehungsweise der Dimensionierung des Verbrennungsmotors ein exaktes Halten beziehungsweise Regeln der Drehzahl des Verbrennungsmotors schwierig ist. Dann kann beispielsweise über eine Drehmomentvorgabe des Generators die Drehzahl des Generators konstant gehalten werden und entsprechend schnell ausgeregelt werden, und der Verbrennungsmotor wird für die jeweilige Spannung beziehungsweise den jeweiligen Strom beziehungsweise die jeweilige Leistung als Vorgabe geregelt, so dass sich aus dem Zusammenspiel eine verbesserte Regelung und damit eine erhöhte Effizienz sowie ein stabileres Bordnetz ergibt.

Entsprechend ist es durch die Verwendung der Regelung des Generators möglich, den Generator weitgehend unabhängig von der Eingangsdrehzahl durch den Verbrennungsmotor in seinem für den jeweiligen Vorgabeparameter, also beispielsweise die Stromvorgabe, die Spannungsvorgabe oder die Leistungsvorgabe, optimalen Bereich zu betreiben und entsprechend der jeweiligen Parameter die Bordspannung beziehungsweise eine Ladekurve für die Batteriebank zuverlässig bereitzustellen.

In einer bevorzugten Ausbildung ist der Gleichstromgenerator ein elektronisch kommutierter Gleichstromgenerator und die Generatorregeleinrichtung ist dazu eingerichtet, den Gleichstromgenerator über eine Variation der Generatorstellgröße Generatordrehmoment und/oder Generatorstrom und/oder Generatorspannung und/oder Generatordrehzahl und/oder Generatorleistung auf die jeweilige Generatorführungsgröße zu regeln.

Bevorzugt bewirkt die Motorregeleinrichtung des Verbrennungsmotors über eine Variation der Motorstellgröße Kraftstoffzufuhr und/oder Einspritzventilsteuerung und/oder Zündzeitpunkt und/oder Gemischzusammensetzung und/oder Luftzufuhr und/oder Nockenwellenverstellung und/oder In einer bevorzugten Ausbildung ist der Gleichstromgenerator ein elektronisch kommutierter Gleichstromgenerator und die Generatorregeleinrichtung ist dazu eingerichtet, den Gleichstromgenerator über eine Variation der Generatorstellgröße Generatordrehmoment und/oder Generatorstrom und/oder Generatorspannung und/oder Generatordrehzahl und/oder Generatorleistung auf die jeweilige Generatorführungsgröße zu regeln.

Bevorzugt bewirkt die Motorregeleinrichtung des Verbrennungsmotors über eine Variation der Motorstellgröße Kraftstoffzufuhr und/oder Einspritzventilsteuerung und/oder Zündzeitpunkt und/oder Gemischzusammensetzung und/oder Luftzufuhr und/oder Nockenwellenverstellung und/oder Turboladersteuerung, dass der Verbrennungsmotor auf die jeweilige Motorführungsgröße geregelt wird.

Beispielsweise kann über die Steuervorrichtung eine entsprechende Drehzahlvorgabe an die Motorregeleinrichtung übergeben werden, und die Motorregeleinrichtung regelt dann die Drehzahl gemäß der Drehzahlvorgabe durch eine Variation der Kraftstoffzufuhr zum Verbrennungsmotor. Damit ergibt sich, dass der Verbrennungsmotor weitgehend stabil auf der vorgegebenen Drehzahl betrieben werden kann.

Ein besonders kompakter und damit effizienter Aufbau lässt sich erreichen, wenn die Generatorregeleinrichtung und/oder die Motorregeleinrichtung des Verbrennungsmotors und/oder die Steuervorrichtung in einem zentralen Controller integriert sind.

Die Steuervorrichtung umfasst bevorzugt beispielsweise in einer Datenbank hinterlegte Kennlinien und/oder Werte für die Motorführungsgröße und/oder die Generatorführungsgröße und die Steuervorrichtung gibt der Motorregelungseinrichtung und/oder der Generatorregelungseinrichtung einen hinterlegten Wert oder einen aus einer Kennlinien abgeleiteten Wert für die Motorführungsgröße und/oder die Generatorführungsgröße vor. Bevorzugt wird ein Wert der Motorführungsgröße zum Betrieb der Verbrennungsmotors bei maximaler Effizienz oder bei maximaler Leistung vorgegeben und/oder es wird bevorzugt ein Wert der Generatorführungsgröße gemäß einer eine Batterieladekurve vorgebenden Kennlinie vorgegeben.

Batteriespannungs- oder Batterieleistungsvorgabe und der Verbrennungsmotor anhand einer Drehzahlvorgabe.

In einer Alternative kann der Verbrennungsmotor auch gemäß einer Batteriestrom-, Batteriespannungs- oder Batterieleistungsvorgabe geregelt werden und der Generator anhand einer Drehzahlvorgabe.

In einer bevorzugten Weiterbildung überwacht die Steuervorrichtung das Bordnetz beziehungsweise den Zwischenkreis und variiert entsprechend des Zustandes des Bordnetzes beziehungsweise des Zwischenkreises die Vorgabeparameter für die Generatorregeleinrichtung und/oder die Motorregeleinrichtung. Beispielsweise kann bei einer hohen Leistungsanforderung im Bordnetz die Drehzahlvorgabe für den Verbrennungsmotor von einem möglichst effizienten Betriebspunkt hin zu einem Betriebspunkt der Maximalleistung gesetzt werden. Für den Generator wird dann die entsprechende Leistungsanforderung so gesetzt, dass das Bordnetz weiterhin stabil betrieben werden kann.

Weiter bevorzugt kann es sein, dass durch die Steuervorrichtung eine Stromvorgabe zum Laden einer Batteriebank vorgegeben wird, und die Steuervorrichtung den jeweiligen Ladezustand der Batteriebank überwacht, und entsprechend beim Erreichen der Soll-Ladespannung in der Batteriebank von einer Maximalstromvorgabe hin zu einer Konstantspannungsvorgabe wechselt. Damit wird die Generatorregelung so über den Verlauf der Ladung der Batteriebank angepasst, dass die entsprechende Stromkurve beziehungsweise die entsprechende Spannungskurve eine optimale Ladung der Batterie ermöglicht, wobei gleichzeitig der Verbrennungsmotor ebenfalls optimiert aber unabhängig davon geregelt wird.

Entsprechend ergibt sich auf diese Weise auch eine Ladevorrichtung, bei welcher der Verbrennungsmotor in Kombination mit dem Generator eine optimierte Ladekurve für eine Batteriebank bereitstellt.

In einer Weiterbildung kann diese für die Batteriebank vorgesehene Ladekurve in einem über die Batteriebank gepufferten Bordnetz auf die Leistungsanforderung der übrigen Verbraucher innerhalb des Bordnetzes aufgeprägt werden. Mit anderen Worten wird zusätzlich zu der Bereitstellung der Leistung innerhalb des Bordnetzes für die gerade aktiven Verbraucher der Ladestrom so aufgeprägt, dass zusätzlich eine optimierte Ladung der Batteriebank erreicht wird.

Weiterhin kann in einem Batteriegepufferten Bordnetz bei einer vollständig geladenen Batteriebank erreicht werden, dass der Generator zusammen mit dem Verbrennungsmotor so betrieben wird, dass weder eine Entladung noch eine Ladung der Batterie stattfindet, sondern die Batterie ihren Ladungszustand konstant hält, solange der Verbrennungsmotor betrieben wird. Auf diese Weise kann auf eine Zwischenpufferung durch die Batterie weitgehend verzichtet werden, wodurch ebenfalls die Effizienz des Bordnetzes steigt, da die Pufferverluste fortfallen.

Bevorzugt weist der Verbrennungsmotor einen elektronischen Motorcontroller auf und die Motorregeleinrichtung nimmt entsprechend mittels des elektronischen Motorcontrollers die Regelung des Verbrennungsmotors vor.

In einer weiteren bevorzugten Ausführungsform weist der Verbrennungsmotor einen mechanischen Drehzahlregler als Motorregeleinrichtung auf und der mechanische Drehzahlregler erhält von der Steuervorrichtung eine Motorführungsgröße in Form einer Drehzahlvorgabe über einen mechanischen und/oder pneumatischen und/oder hydraulischen Aktuator zur Verstellung des mechanischen Drehzahlreglers. Auf diese Weise können auch einfache Verbrennungsmotoren in der Vorrichtung verwendet werden.

Bevorzugt wird der Gleichstromgenerator als Startermotor für den Verbrennungsmotor verwendet, wobei bevorzugt als Generatorführungsgröße eine Drehzahlvorgabe an die Generatorregeleinrichtung übergeben wird und besonders bevorzugt nach Starten des Verbrennungsmotors die Generatorführungsgröße beibehalten wird.

Entsprechend ist festzuhalten, dass ein Arbeitspunkt des Verbrennungsmotors in weiten Bereichen unabhängig von den jeweiligen Regelaufgaben des Generators eingestellt werden kann, da der Generator eigenständig geregelt wird. Die genannten Optimierungsstrategien lassen sich auf diese Weise umsetzen, so dass aufgrund der Kombination der Regelung des Verbrennungsmotors und der davon im Wesentlichen unabhängigen Regelung des Generators die entsprechende Bereitstellung von Energie im Bordnetz beziehungsweise zum Laden auf besonders effiziente Weise ermöglicht wird.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Darstellung eines Bordsystems in einem elektrisch angetriebenen Boot, welche ein Bordnetz und eine Vorrichtung zur Bereitstellung elektrischer Energie zeigt;
- Figur 2: eine schematische Darstellung eines weiteren Bordsystems mit einem Aufbau, bei welchem eine Spannungsvorgabe als Generatorführungsgröße vorgesehen ist; und
- Figur 3: eine schematische Darstellung eines weiteren Bordsystems mit einem Aufbau, bei welchem eine Spannungsvorgabe als Motorführungsgröße vorgesehen ist.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

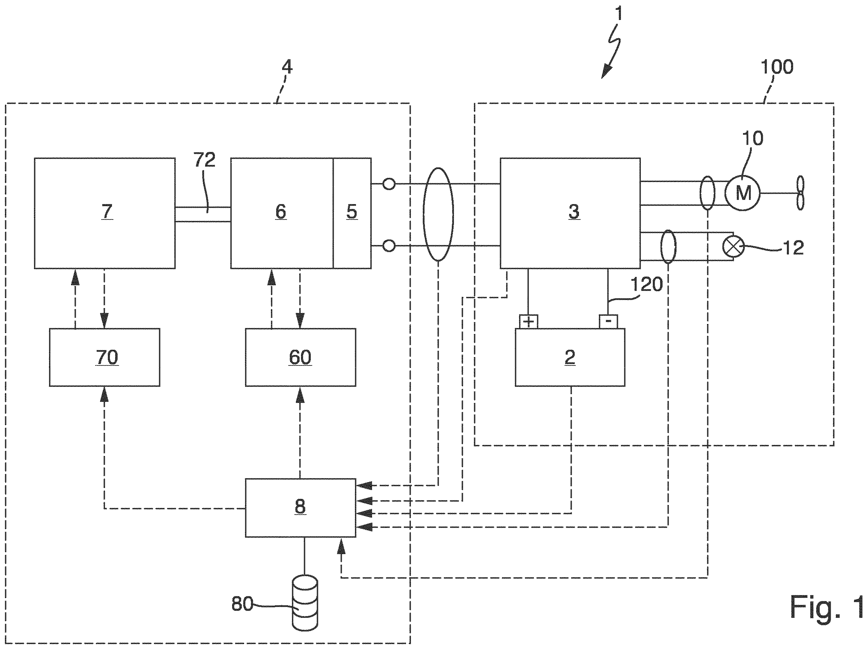

In Figur 1 ist sehr schematisch der Aufbau eines Bordsystems 1 in einem elektrisch angetriebenen Boot gezeigt. Das Bordsystem 1 umfasst ein Bordnetz 100 des Boots und eine Vorrichtung 4 zum Bereitstellen elektrischer Energie in dem Bordnetz 100. Die Vorrichtung 4 zum Bereitstellen elektrischer Energie des Bordsystems 1 ist unter anderem dazu vorgesehen, sowohl Einzelverbraucher 10, 12 in dem jeweiligen Bordnetz 100 mit elektrischer Energie zu versorgen, als auch beispielsweise eine Batteriebank 2, welche als Hauptenergiequelle für das Bordsystem 1 vorgesehen sein kann oder welche alternativ auch als Puffervorrichtung vorgesehen sein kann, derart mit elektrischer Energie zu versorgen, dass der Ladezustand der Batteriebank 2 beeinflusst werden kann und diese insbesondere geladen werden kann. Mit anderen Worten kann die Vorrichtung 4 zum Bereitstellen elektrischer Energie zum Laden der Batteriebank 2 eingesetzt werden, sie kann aber auch zum direkten Versorgen der Einzelverbraucher 10, 12 eingesetzt werden, oder zu einer kombinierten Versorgung von Einzelverbrauchern 10, 12 bei gleichzeitigem Laden der Batteriebank 2.

In Figur 1 ist das Bordnetz 100 ebenfalls in einer sehr schematischen Weise dargestellt. Ein Elektromotor 10 ist in dem Bordnetz 100 vorgesehen, welcher für das Boot als Hauptantrieb vorgesehen sein kann und mittels welchem das Boot angetrieben werden kann. Der Elektromotor 10 steht aber auch symbolisch für jeden anderen Elektromotor an Bord des Boots, beispielsweise für einen Elektromotor einer elektrischen Winsch auf einem Segelboot oder für einen Elektromotor einer Ankerwinde oder eines Davits etc.

Weiterhin ist in dem Bordnetz 100 schematisch ein weiterer Verbraucher in Form der Glühbirne 12 dargestellt, welcher entsprechend elektrische Energie aus dem Bordnetz 100 entnimmt. Die schematisch eingezeichnete Glühbirne 12 steht dabei symbolisch für sämtliche anderen elektrischen Verbraucher innerhalb des Boots. In dem Boot können beispielsweise elektrische Verbraucher in Form der Bootsbeleuchtung, der Positionslampen, von Kommunikationsgeräten, Navigationsgeräten, Datenverarbeitungsgeräten, oder der generellen Steuerung beziehungsweise Regelung der Funktionen des Boots im Bordnetz 100 vorliegen. Weiterhin können elektrische Verbraucher in Form von Komforteinrichtungen wie beispielsweise Klimaanlagen, Kühlvorrichtungen, Kocheinrichtungen etc. im Bordnetz 100 vorliegen. Diese Auflistung ist nicht als abschließend zu betrachten, sondern die gezeigten Verbraucher innerhalb des Bordnetzes 100, welche hier schematisch in Form des Elektromotors 10 und der Glühbirne 12 gezeigt sind, können jegliche anderen Verbraucher innerhalb des Bordnetzes 100 darstellen.

Die Verbraucher innerhalb des Bordnetzes 100 können eine im Wesentlichen konstante Energieanforderung haben, wie beispielsweise Positionslampen auf einem Boot, welche über einen längeren Zeitraum hinweg konstant betrieben werden. Die Verbraucher können aber auch stark schwankende Energieanforderungen aufweisen. So wird beispielsweise der Hauptantriebsmotor eines Boots je nach Fahrtzustand bei unterschiedlichen Leistungen betrieben, ausgeschaltet oder gar in einem Rekuperationsmodus betrieben. Entsprechend schwankt die Energieanforderung eines solchen Verbrauchers an das Bordnetz 100 stark.

Das Bordsystem 1 umfasst weiterhin eine Batteriebank 2, welche dem Bordnetz 100 elektrische Energie zur Verfügung stellt. Die Batteriebank 2 kann entweder als Pufferbatterie vorgesehen sein, welche Schwankungen in der von den Verbrauchern 10, 12 geforderten Energieanforderung beziehungsweise deren Spitzen abpuffert und entsprechend bei einem Energieüberschuss geladen wird. Üblicherweise wird die Batteriebank 2 aber als Hauptenergiespeicher für das Bordnetz 100 vorgesehen sein. Mit anderen Worten ist das Bordsystem 1 als ein solches vorgesehen, welches in seiner überwiegenden Betriebszeit mit der Energieversorgung über die Batteriebank 2 auskommt.

Beispielsweise wird bei elektrisch angetriebenen Booten die Batteriebank 2 üblicherweise als Hauptenergiequelle vorgehalten. So ist bei elektrisch angetriebenen Booten ein bevorzugter Betriebsmodus darin zu sehen, das Boot lediglich auf Grundlage der in der Batteriebank 2 gespeicherten Energie fortzubewegen. Auf diese Weise ist ein sehr geräuscharmer und gleichzeitig zumindest lokal emissionsfreier Betrieb des Boots möglich. Die Batteriebank 2 ist entsprechend so dimensioniert, dass der Elektromotor 10, welcher als Hauptantrieb des Boots dient, über einen hinreichend langen Zeitraum ausschließlich von der Batteriebank 2 mit Energie versorgt werden kann.

Die Batteriebank 2 kann bevorzugt über einen Landanschluss geladen werden.

In Figur 1 ist weiterhin schematisch eine Schaltvorrichtung 3 des Bordnetzes 100 gezeigt, welche es ermöglicht, die von der Batteriebank 2 über den Zwischenkreis 120 bereitgestellte Energie entsprechend an den Elektromotor 10 und die übrigen Endverbraucher 12 zu verteilen und zu schalten. Die Schaltvorrichtung 3 kann dabei auch beispielsweise einen Fahrtregler umfassen, welcher den Energiefluss zu dem Elektromotor 10 steuert. Entsprechend kann ein Fahrer des Boots über einen entsprechenden Geber, Beispielsweise einen Ferngashebel, die gewünschte Fahrstufe für den Elektromotor 10 vorgegeben, so das über die Schaltvorrichtung 3 entsprechend die gewünschte Energie aus der Batteriebank 2 dem Elektromotor 10 zugeführt wird und das Boot entsprechend in der vom Fahrer vorgegebenen Fahrstufe betrieben wird.

Die Schaltvorrichtung 3 kann auch bei einem Rekuperationsbetrieb des Elektromotors 10 dafür sorgen, dass die rekuperierte Energie der Batteriebank 2 wieder zugeführt wird, um deren Ladezustand zu erhöhen beziehungsweise zu erhalten.

In dem in Figur 1 gezeigten Ausführungsbeispiel des Bordsystems 1 ist weiterhin eine Vorrichtung zum Bereitstellen elektrischer Energie 4 gezeigt, welche dem Bordnetz 100 und, in dem gezeigten Ausführungsbeispiel, der Schaltvorrichtung 3, zusätzliche elektrische Energie zur Verfügung stellt.

Die Vorrichtung 4 zum Bereitstellen elektrischer Energie umfasst einen Generator 6, welcher in dem Ausführungsbeispiel als elektronisch kommutierter Gleichstromgenerator ausgebildet ist, und einen Verbrennungsmotor 7, welcher über eine entsprechende Antriebswelle 72 den Generator 6 antreibt. Die Antriebswelle 72 kann mit einem Getriebe versehen sein, welches die von dem Verbrennungsmotor 7 ausgegebene Drehzahl auf eine vom Generator 6 geforderte Drehzahl übersetzt.

Der Generator 6 weist eine Generatorregeleinrichtung 60 auf, mittels welcher der Generator 6 auf Grundlage mindestens einer vorgegebenen Generatorführungsgröße geregelt werden kann. Entsprechend kann der Generator 6 direkt dadurch, dass er über die Generatorregeleinrichtung 60 geregelt wird, entsprechend gewisser Vorgaben und insbesondere anhand entsprechender Generatorführungsgrößen betrieben werden und dann im Wesentlichen stabil betrieben werden.

Als Generatorführungsgröße kann eine Spannungsvorgabe und/oder eine Stromvorgabe und/oder eine Leistungsvorgabe und/oder eine Batteriestromvorgabe und/oder eine Batteriespannungsvorgabe und/oder eine Batterieleistungsvorgabe und/oder eine Zwischenkreisspannungsvorgabe und/oder eine Zwischenkreisstromvorgabe und/oder eine Zwischenkreisleistungsvorgabe und/eine Leistungsvorgabe und/oder eine Betriebspunktvorgabe und/oder eine Drehzahlvorgabe und/oder eine Drehmomentvorgabe vorgesehen sein, mittels welcher der Generator geregelt werden kann.

Der elektronisch kommutierte Gleichstromgenerator 6 kann über eine Variation der Generatorstellgröße Generatordrehmoment und/oder Generatorstrom und/oder Generatorspannung und/oder Generatordrehzahl und/oder Generatorleistung auf die jeweilige Generatorführungsgröße geregelt werden.

Der Verbrennungsmotor 7 weist seinerseits ebenfalls eine Motorregeleinrichtung 70 auf, mittels welcher der Verbrennungsmotor 7 auf Grundlage mindestens einer Motorführungsgröße geregelt werden kann. Damit kann der Verbrennungsmotor 7 durch die Vorgabe der Motorführungsgröße mittels der Motorregeleinrichtung 70 stabil geregelt werden.

Als Motorführungsgröße kann eine Spannungsvorgabe und/oder eine Stromvorgabe und/oder eine Leistungsvorgabe und/oder eine Batteriestromvorgabe und/oder eine Batteriespannungsvorgabe und/oder eine Batterieleistungsvorgabe und/oder eine Zwischenkreisspannungsvorgabe und/oder eine Zwischenkreisstromvorgabe und/oder eine Zwischenkreisleistungsvorgabe und/eine Leistungsvorgabe und/oder eine Betriebspunktvorgabe und/oder eine Drehzahlvorgabe und/oder eine Drehmomentvorgabe vorgesehen sein, mittels welcher der Verbrennungsmotor geregelt werden kann.

Der Verbrennungsmotor 7 kann über eine Variation der Motorstellgröße Kraftstoffzufuhr und/oder Einspritzventilsteuerung und/oder Zündzeitpunkt und/oder Gemischzusammensetzung und/oder Luftzufuhr und/oder Nockenwellenverstellung und/oder Turboladersteuerung auf die jeweilige Motorführungsgröße geregelt werden.

Die Motorregeleinrichtung 70 hat dabei beispielsweise als Motorstellgröße zur Verfügung, die entsprechende Kraftstoffzufuhr des Verbrennungsmotors 7 beispielsweise über einen entsprechenden Aktuator oder einen Gaszug zu regeln. Wandert die an der Abtriebswelle 72 des Verbrennungsmotors 7 gemessene Drehzahl aus der als Motorführungsgröße vorgegebenen Drehzahlvorgabe heraus, so kann die Motorregeleinrichtung 70 entsprechend über einen Regeleingriff an der Kraftstoffzufuhr den gewünschten Wert der Drehzahl des Verbrennungsmotors 7 wieder herstellen.

Die Motorregeleinrichtung 70 des Verbrennungsmotors 7 kann in einer bevorzugten Ausführungsform als elektronische Regeleinrichtung vorgesehen sein, welche über ein entsprechendes Sensorsignal beispielsweise die aktuelle Drehzahl des Verbrennungsmotors 7 oder des Generators 6 erhält und aufgrund der Drehzahlvorgabe über einen Aktuator entsprechend die Kraftstoffzufuhr zu dem Verbrennungsmotor 7 regelt.

Der Verbrennungsmotor 7 kann aber auch über eine im Wesentlichen mechanische Regeleinrichtung 70 betrieben werden, die beispielsweise in Form eines Fliehkraftreglers vorgesehen ist, in den eine entsprechende Drehzahlvorgabe mechanisch eingestellt wird. Eine Motorführungsgröße in Form der Drehzahlvorgabe kann bei Verwendung eines Fliehkraftreglers darüber variiert werden, dass der entsprechende Arbeitspunkt des Fliehkraftreglers mittels eines elektromechanischen, hydraulischen oder pneumatischen Aktuators eingestellt und verändert wird. Entsprechend kann dann, wenn eine geänderte Drehzahlvorgabe gewünscht ist, über den Aktuator der Fliehkraftregler so eingestellt werden, dass er den Verbrennungsmotor 7 auf die neue Drehzahlvorgabe hin regelt.

Der Verbrennungsmotor 7 kann, neben einer Drehzahlvorgabe, auch über andere Vorgaben als Motorführungsgröße geregelt werden. Insbesondere ist es vorgesehen, dass der Verbrennungsmotor 7 beispielsweise anhand einer Stromvorgabe, einer Spannungsvorgabe oder einer Leistungsvorgabe des Bordnetzes 100 und oder eines Zwischenkreises 120 geregelt wird. In einem solchen Falle wird der Generator 6 aus Sicht der Motorregelung 70 zunächst regelungstechnisch nicht notwendig beachtet, sondern der Verbrennungsmotor 7 wird über eine Bestimmung beispielsweise der Spannung im Bordnetz 100 so geregelt, dass eine entsprechende Vorgabespannung als Motorführungsgröße erreicht wird.

Die Motorregeleinrichtung 70 wird in einem solchen Fall entsprechend eine Spannungsvorgabe als Motorführungsgröße erhalten, die ermittelte Bordspannung mit der Spannungsvorgabe vergleichen um dann wiederum beispielsweise über eine Variation beispielsweise der Motorstellgröße Kraftstoffzufuhr die gewünschte Vorgabespannung zu erreichen.

Die Generatorregeleinrichtung 60 des Generators 6 ermöglicht es ebenfalls, den Generator anhand einer Generatorführungsgröße zu regeln. Der Generator 6 kann bei seiner Ausbildung als elektronisch kommutierter Gleichstromgenerator beispielsweise als Generatorstellgröße darüber geregelt werden, dass das Drehmoment, der Generatorstrom und damit die entsprechende Erregung / Drehmoment oder die Drehzahl eingestellt werden. Diese Generatorstellgrößen können so variiert werden, dass die entsprechende Generatorführgröße erreicht wird.

Entsprechend kann der Generator 6 im Wesentlichen unabhängig von dem Verbrennungsmotor 7 geregelt werden.

In einem typischen Betriebsmodus wird entsprechend der Verbrennungsmotor 7 mittels der Motorregeleinrichtung 70 bei einer vorgegebenen Drehzahlvorgabe als Motorführungsgröße betrieben. Der Generator 6 hingegen wird beispielsweise bei einer über eine Spannungsvorgabe als Generatorführungsgröße vorgegebenen Spannung betrieben, welche der Generator 6 aufrechterhält. Die Generatorregeleinrichtung 60 variiert entsprechend der Generatorstellgrößen so, dass die Generatorführungsgröße erreicht wird. Damit können die vom Bordnetz 100 geforderten Vorgaben und insbesondere in dem genannten Fall die Spannungsvorgabe erreicht werden.

Damit kann sowohl der Verbrennungsmotor 7 als auch der Generator 6 jeweils weitgehend optimiert betrieben werden, so das einerseits eine weiter erhöhte Energieeffizienz erreicht werden kann, und andererseits die Qualität der Energieversorgung des Bordnetzes 100 weiter erhöht wird. In einem typischen Betriebsmodus wird entsprechend der Verbrennungsmotor 7 mittels der Motorregeleinrichtung 70 bei einer vorgegebenen Drehzahlvorgabe als Motorführungsgröße betrieben. Der Generator 6 hingegen wird beispielsweise bei einer über eine Spannungsvorgabe als Generatorführungsgröße vorgegebenen Spannung betrieben, welche der Generator 6 aufrechterhält. Die Generatorregeleinrichtung 60 variiert entsprechend der Generatorstellgrößen so, dass die Generatorführungsgröße erreicht wird. Damit können die vom Bordnetz 100 geforderten Vorgaben und insbesondere in dem genannten Fall die Spannungsvorgabe erreicht werden.

Damit kann sowohl der Verbrennungsmotor 7 als auch der Generator 6 jeweils weitgehend optimiert betrieben werden, so dass einerseits eine weiter erhöhte Energieeffizienz erreicht werden kann, und andererseits die Qualität der Energieversorgung des Bordnetzes 100 weiter erhöht wird. Der Generator 6 und der Verbrennungsmotor 7 können damit auch weitgehend unabhängig voneinander geregelt werden.

Eine übergeordnete Steuerung 8 ist vorgesehen, welche sowohl der Generatorregeleinrichtung 60 als auch der Motorregelungseinrichtung 70 die entsprechenden Führgrößen vorgibt. Die Steuervorrichtung 8 übergibt entsprechend an die Motorregeleinrichtung 70 eine Motorführungsgröße wie beispielsweise eine Drehzahlvorgabe, welche von der Motorregeleinrichtung 70 dann über eine Variation der entsprechenden Motorstellgrößen eigenständig und autark geregelt wird.

Die Steuervorrichtung 8 übergibt weiterhin an die Generatorregeleinrichtung 60 eine Generatorführgröße beispielsweise in Form einer Spannungsvorgabe, einer Stromvorgabe oder einer Leistungsvorgabe für das Bordnetz 100 und die Generatorregeleinrichtung 60 regelt diese Vorgabe dann über die Variation der entsprechenden Generatorstellgröße ebenfalls eigenständig und autark aus.

Die Steuervorrichtung 8 legt die entsprechenden Generatorführgrößen und Motorführgrößen auf Grundlage der jeweiligen Anforderungen aus dem Bordnetz 100 unter Berücksichtigung der Kenntnis des Bordsystems 1 fest. Beispielsweise kann die Steuervorrichtung 8 über eine Ermittlung des Stromes beziehungsweise der Spannung beziehungsweise der geforderten Leistung im Zwischenkreis zwischen dem Generator 6 und der Schalteinrichtung 3 oder in den die jeweiligen Verbraucher 10, 12 versorgenden Kreise eine entsprechende Stromvorgabe, Spannungsvorgabe oder Leistungsvorgabe ableiten.

Beispielsweise kann der Verbrennungsmotor 7 von der Steuervorrichtung 8 angewiesen werden, in seinem Effizienzmaximum betrieben zu werden. Die Steuervorrichtung 8 wird dann eine entsprechende Drehzahlvorgabe als Motorführungsgröße an die Regeleinrichtung 70 des Verbrennungsmotors 7 so übergeben, dass der Verbrennungsmotor 7 entsprechend in seinem Effizienzmaximum betrieben wird.

Erkennt die Steuervorrichtung 8 jedoch, dass eine höhere Leistungsabgabe erforderlich ist, kann sie die Regeleinrichtung 70 des Verbrennungsmotors 7 auch dahingehend anweisen, dass der Verbrennungsmotor 7 in seinem Leistungsmaximum betrieben wird, so dass die Regeleinrichtung 70 entsprechend von der Steuervorrichtung 8 als Motorführungsgröße eine Drehzahlvorgabe erhält, welche üblicherweise über der Drehzahlvorgabe liegt, welche den Verbrennungsmotor 7 in seinem Effizienzmaximum betreibt.

Hierbei kann jedoch von der Steuervorrichtung 8 berücksichtigt werden, dass bei der Drehzahl maximaler Effizienz ein bestimmter Leistungsbereich abgedeckt werden kann. Das Erhöhen der Leistungsanforderung bedeutet daher nicht automatisch, dass die Drehzahl der höchsten Effizienz verlassen werden muss. Erst wenn die Leistungsanforderung die bei dieser Drehzahl maximal erzielbare Leistung übersteigt, wird auch die Drehzahlvorgabe durch die Steuervorrichtung 8 erhöht

Die entsprechenden Vorgaben an den Generator 6 beziehungsweise die Generatorregeleinrichtung 60 des Generators 6 können von der Steuervorrichtung 8 ebenfalls entweder auf Grundlage der in der Datenbank 80 gespeicherten Kennlinien oder aber auf Grundlage der jeweils vorgegebenen Messungen beziehungsweise Überwachungen des Zwischenkreises 120 zur Batteriebank 2 beziehungsweise der jeweiligen Verbraucherkreis vorgegeben werden.

Beispielsweise kann die Steuervorrichtung 8 aus dem Bordnetz 100 heraus ermitteln, dass ein bestimmter Strom, eine bestimmte Leistung oder eine bestimmte Spannung gefordert ist. Entsprechend wird diese als Generatorführungsgröße an die Generatorregeleinrichtung 60 kommuniziert, welche dann ihrerseits den Generator 6 über die entsprechende Generatorstellgröße in diesen Arbeitspunkt versetzt, beispielsweise darüber, dass ein Drehmoment oder ein Generatorstrom festgelegt wird, welcher dann mittels der Generatorregeleinrichtung 60 autark ausgeregelt wird.

Die Steuervorrichtung 8 kann auch, wenn ein Ladebetrieb für die Batteriebank 2 vorgesehen ist, eine entsprechende Ladekurve der Generatorregeleinrichtung 60 vorgeben derart, dass die Vorrichtung 4 direkt als aktives Batterieladegerät fungiert. Mit anderen Worten kann die Steuervorrichtung 8 eine optimale Ladekurve beziehungsweise eine effiziente Ladekurve zum Bereitstellen der entsprechenden Ladeleistung für die Batteriebank 2 durchfahren.

Dabei kann beispielsweise in einem Hauptladeabschnitt die Batteriebank 2 mit einem Maximalstrom beaufschlagt werden, so dass die von der Steuervorrichtung 8 an die Generatorregeleinrichtung 60 übermittelte Generatorführungsgröße entsprechend eine Maximalstromvorgabe ist, welche vom Generator 6 dann mittels der Generatorregeleinrichtung 60 autark geregelt wird.

Detektiert die Steuervorrichtung 8 dann in der Batteriebank 2 das Erreichen einer Sollladespannung, so wird der Betrieb des Generators 6 durch die Übermittlung einer neuen Generatorführgröße, in diesem Fall einer Vorgabespannung in Höhe der Sollladespannung, auf die Spannung geregelt, welche dann mittels der Generatorregeleinrichtung 60 aufrechterhalten bleibt. Entsprechend wird der Generator 6 dann auf eine Spannungsvorgabe hin betrieben, so dass im Nachladebereich die Batteriebank 2 ebenfalls optimiert geladen werden kann.

Auf diese Weise ist es möglich, sowohl den Verbrennungsmotor 7 als auch den Generator 6 in einem weiten Bereich unabhängig voneinander zu regeln, und dennoch die gewünschte elektrische Energie im Bordnetz 100 entweder zur Versorgung von Verbrauchern oder zur Ladung der Batteriebank zu verwenden und zuverlässig bereitzustellen.

Der Ladevorgang für die Batteriebank 2 kann auch auf die übrige Leistungsanforderung des Bordnetzes 100 aufgeprägt werden. Mit anderen Worten kann über die Steuervorrichtung 8 ein Aufprägen einer exemplarisch gerade beschriebenen Ladekurve auf die ohnehin vorhandene Leistungsanforderung innerhalb des Bordnetzes 100 stattfinden. So kann erreicht werden, dass trotz der Leistungsaufnahme der anderen Verbraucher die Batteriebank 2 zuverlässig über den Generator 6 geladen wird. Die jeweils überschüssige Energie, die von den Verbrauchern nicht abgenommen wird, wird dann entsprechend der Batteriebank 2 zugeführt.

Je nach Dimensionierung der Vorrichtung 4 und je nach Auslegung des Verbrennungsmotors 7 kann ein Betrieb des Verbrennungsmotors 7 vorteilhaft sein, bei welchem der Verbrennungsmotor 7 über die Motorregeleinrichtung 70 mit einer Motorführungsgröße versorgt wird, welche beispielsweise eine Stromvorgabe, eine Spannungsvorgabe oder eine Leistungsvorgabe des Bordnetzes 100 ist. Die entsprechenden Überwachungsparameter können der Motorregeleinrichtung 70 entweder direkt oder durch Vermittlung der Steuervorrichtung 8 übergeben werden.

Entsprechend wird der Verbrennungsmotor 7 mittels der Motorregeleinrichtung 70 dann so geregelt, dass im Bordnetz 100 beispielsweise die gewünschte Stromvorgabe, Spannungsvorgabe oder Leistungsvorgabe erreicht wird. Gleichzeitig wird der Generator 6 über die Generatorregeleinrichtung 60 bevorzugt so betrieben, dass er die Drehzahl im Wesentlichen konstant hält.

Auf diese Weise kann mittels der Steuervorrichtung 8 auch bei regelungstechnisch eher einfacher ausgebildeten Verbrennungsmotoren 7, welche dann aber entsprechend einen Kostenvorteil bereitstellen, über die Regelung des Verbrennungsmotors 7 mittels der Motorregeleinrichtung 70 beispielsweise auf eine Spannungsvorgabe hin, einfacher geregelt werden, da der Generator 6 bereits die Drehzahl festhält und entsprechend die jeweils benötigte Leistung über eine dynamische Regelung der entsprechenden Kraftstoffzufuhr zum Verbrennungsmotor 7 durchgeführt wird.

Die Vorrichtung 4 kann weiterhin dadurch besonders effizient aufgebaut werden, dass der Generator 6 als gleichzeitig auch als Startermotor für den Verbrennungsmotor 7 dient. Entsprechend kann durch ein entsprechendes Antreiben des Verbrennungsmotors 7 dieser auf eine Drehzahl gebracht werden, welche eine sichere Zündung erlaubt. Danach wird der Generator 6 dann in den Generatorbetrieb umgeschaltet.

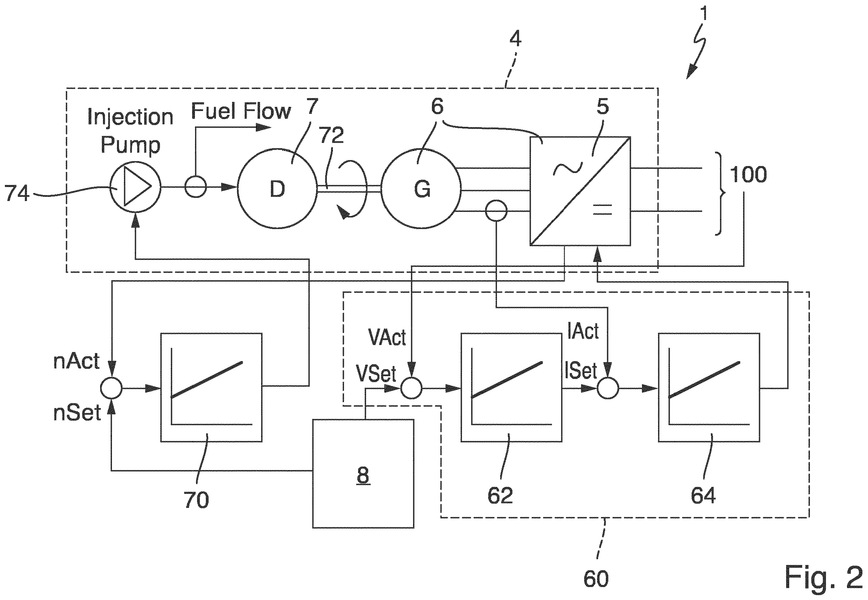

In der Figur 2 ist eine weitere Ausbildung des Bordsystems 1 gezeigt, in welchem die die Vorrichtung 4 zum Bereitstellen elektrischer Energie mit einem Verbrennungsmotor 7, der über eine Antriebswelle 72 einen Generator 6 antreibt ausgebildet ist. Die Leistung des Verbrennungsmotors 7 wird über eine Kraftstoffpumpe 74 zur Bereitstellung einer Regelung einer Motorstellgröße variiert.

Ein Gleichrichter 5 ist mit dem Generator 6 integriert, so dass das Bordnetz 100 mit Gleichstrom vom Generator 6 versorgt wird.

In dem in Figur 2 gezeigten Ausführungsbeispiel ist eine Generatorregeleinrichtung 60 vorgesehen, in welcher in einer ersten Regelstufe 62 die Ist-Spannung V_{Akt} mit der als Generatorführungsgröße vorgesehenen Spannungsvorgabe V_{Set} geregelt wird. Damit wird eine Generatorstellgröße in Form des Generatorstroms bereitgestellt, um entsprechend das Generatordrehmoment zu beeinflussen.

In einer zweiten Regelstufe 64 der Generatorregeleinrichtung 60 wird das Generatordrehmoment über die Generatorführungsgröße des Generatorstroms I_{Set} verglichen mit dem im am Generator 6 vorliegenden Generatorstrom I _{Akt} und entsprechend eine Stellgröße für den Generatorstrom bereitgestellt. Auf diese Weise kann das Drehmoment des Generators 6 über den Generatorstrom bereitgestellt werden.

Die Steuervorrichtung 8 legt die Generatorführgröße der Generatorspannung V_{Set} fest. Weiterhin wird von der Steuervorrichtung 8 für den Verbrennungsmotor eine Drehzahl n_{Set} festgelegt, welche über die Motorregeleinrichtung 70 entsprechend so ausgeregelt werden kann, dass die Motorregeleinrichtung 70 über die Variation der Motorstellgröße der Einspritzpumpe 74 entsprechend die Drehzahl des Verbrennungsmotors 7 ausregeln kann. Die ist Drehzahl des Verbrennungsmotors 7 wird der Motorregeleinrichtung 70 als n_{Akt} zugeführt.

In der Steuervorrichtung 8 wird entsprechend auf der Grundlage der Spannungssteuerung unter Berücksichtigung beispielsweise eines festen Multiplikators oder einer entsprechenden Wertetabelle oder einer entsprechenden Kennlinie eine entsprechende Motordrehzahl als Motorführungsgröße bereitgestellt, welche dann über die Motorregeleinrichtung 70 zur Regelung des Verbrennungsmotors 7 hinzugezogen wird.

Damit übergibt die Steuervorrichtung 8 in diesem Ausführungsbeispiel der Generatorregeleinrichtung 60 eine Spannungsvorgabe und der Motorregeleinrichtung 70 eine Drehzahlvorgabe.

Entsprechend wird der Generator 6 entsprechend der Generatorführgröße, in diesem Fall der im Bordnetz 100 zu erreichenden Vorgabespannung, geführt, wobei der Generator 6 dann bezüglich seiner Stellgröße Generatorstrom, welche gleichzeitig auch das Generatordrehmoment beeinflusst, geregelt wird.

Damit findet eine im wesentlichen unabhängige Regelung des Verbrennungsmotors 7 und des Generators 6 so statt, dass in einem Optimierungsprozess ein besonders effizienter Betrieb erreicht werden kann, und die Umwandlung von Kraftstoff in elektrische Energie für die jeweiligen Betriebsvoraussetzungen des Bordsystems 1 besonders effizient durchgeführt werden kann.

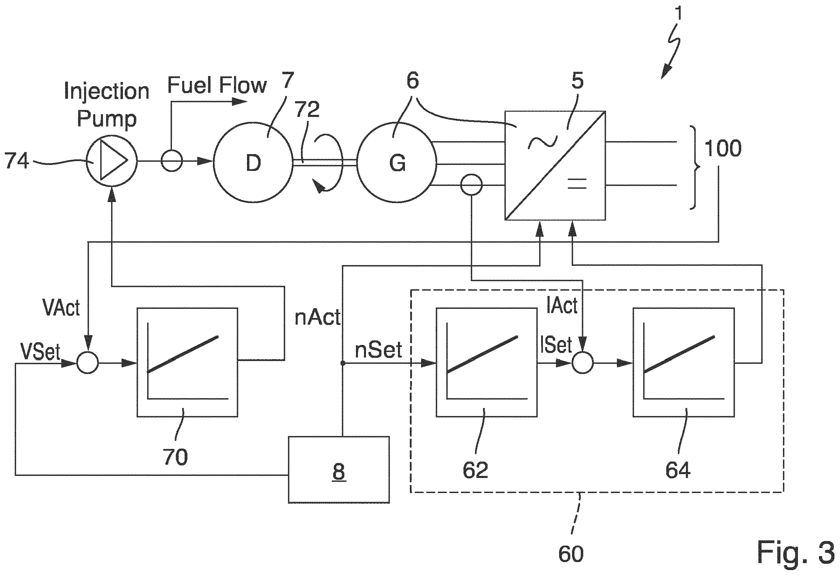

In der Figur 3 wird noch ein weiterer Aufbau für das Bordsystem 1 gezeigt. Hierbei wird mittels der Steuervorrichtung 8 der Generatorregeleinrichtung 60 eine Generatordrehzahl n_{Set} übergeben, welche in einer ersten Regelstufe 62 ein Generatordrehmoment über die Generatorführungsgröße des Generatorstroms I_{Set} vorgibt, welche in einer zweiten Regelstufe 64 mit dem im am Generator 6 vorliegenden Generatorstrom I _{Akt} verglichen wird und entsprechend eine Stellgröße für den Generatorstrom bereitgestellt.

Der Verbrennungsmotor 7 wird an seiner Stellgröße an der Einspritzpumpe 74 über die Motorregeleinrichtung 70 so geregelt, dass eine über die Steuervorrichtung 8 vorgegebene Spannung V_{Set} gegenüber der Ist-Spannung V_{Akt} im Bordnetz 100 ausgeregelt wird.

Entsprechend wird das Drehmoment des Generators 6 über die Generatorregeleinrichtung 60 auf der Grundlage der tatsächlichen aktuellen Drehzahl des Generators 6 bestimmt, beispielsweise auf Grundlage eines festen Faktors, einer Nachschlagtabelle oder einer Kennlinie, welche die Drehzahl mit dem Drehmoment des Generators in Bezug setzt. Der Verbrennungsmotor 7 wird entsprechend so angesteuert, dass die gewünschte Spannung im Bordnetz 100 aufrechterhalten wird.

Damit übergibt die Steuervorrichtung 8 in diesem Ausführungsbeispiel der Generatorregeleinrichtung 60 eine Drehzahlvorgabe und der Motorregeleinrichtung 70 eine Spannungsvorgabe.

Entsprechend kann die Drehzahl des Verbrennungsmotors 7 in weiten Bereichen unabhängig von den jeweiligen Regelaufgaben des Generators 6 eingestellt werden, da der Generator 6 mittels der Generatorregeleinrichtung 60 eigenständig geregelt wird. Dies ermöglicht es, den Verbrennungsmotor 7 effizient zu betreiben.

Die vorherige Ausführungsbeispiele dienen lediglich der Veranschaulichung. Die Erfindung ist in Anspruch 1 definiert.

### Bezuqszeichenliste

- 1: Bordsystem
- 10: Elektromotor
- 12: Lampe
- 100: Bordnetz
- 120: Zwischenkreis
- 2: Batteriebank
- 3: Schalteinrichtung
- 4: Vorrichtung zum Bereitstellen elektrischer Energie
- 5: Gleichrichter
- 6: Generator
- 60: Generatoregeleinrichtung
- 7: Verbrennungsmotor
- 70: Motorregeleinrichtung
- 72: Antriebswelle
- 74: Einspritzpumpe
- 8: Steuervorrichtung
- 80: Datenbank

## Patentansprüche

1. Boot mit einem Bordsystem (1) umfassend ein Bordnetz (100) mit einem Elektromotor (10) zum Antrieb des Boots und eine Vorrichtung (4) zum Bereitstellen elektrischer Energie für einen elektrischen Verbraucher (10, 12) und/oder zum Laden einer Batterie, insbesondere Batteriebank (2), wobei die Vorrichtung (4) einen Verbrennungsmotor (7) mit einer Motorregeleinrichtung (70) zum Regeln des Verbrennungsmotors (7) und einen mit dem Verbrennungsmotor (7) gekoppelten Gleichstromgenerator (6) mit einer Generatorregeleinrichtung (60) zum Regeln des Gleichstromgenerators (6) umfasst, wobei eine Steuervorrichtung (8) vorgesehen ist, die dazu eingerichtet ist, der Motorregeleinrichtung (70) eine Motorführungsgröße und der Generatorregeleinrichtung (60) eine Generatorführungsgröße vorzugeben,
um den Verbrennungsmotor (7) auf der Grundlage der Motorführungsgröße und den Gleichstromgenerator (6) auf der Grundlage der Generatorführungsgröße in einem Bereich unabhängig voneinander zu regeln,
wobei die Steuervorrichtung (8) dazu eingerichtet ist, für einen bestimmten Leistungsbereich eine Motorführungsgröße in Form einer konstanten Drehzahlvorgabe aufgrund einer Leistungsanforderung aus dem Bordnetz (100) festzulegen und die konstante Drehzahlvorgabe erst zu erhöhen, wenn der bestimmte Leistungsbereich überschritten wird, und
wobei die Steuervorrichtung (8) dazu eingerichtet ist, eine Generatorführungsgröße in Form einer Spannungsvorgabe, Stromvorgabe oder Leistungsvorgabe auf Grundlage der Leistungsanforderung aus dem Bordnetz (100) bei konstanter Drehzahlvorgabe festzulegen,
wobei die Steuervorrichtung (8) der Motorregelungseinrichtung (70) die konstante Drehzahlvorgabe für die Motorführungsgröße und der Generatorregeleinrichtung (60) die Spannungsvorgabe, Stromvorgabe oder Leistungsvorgabe für die Generatorführungsgröße vorgibt.

2. Boot gemäß Anspruch 1, **dadurch gekennzeichnet, dass** der Gleichstromgenerator (6) ein elektronisch kommutierter Gleichstromgenerator ist und die Generatorregeleinrichtung (60) dazu eingerichtet ist, den Gleichstromgenerator (6) über eine Variation der Generatorstellgröße Generatordrehmoment oder Generatorstrom oder Generatorspannung oder Generatordrehzahl oder Generatorleistung auf die jeweilige Generatorführungsgröße zu regeln.

3. Boot gemäß Anspruch 1 oder 2, **dadurch gekennzeichnet, dass** die Motorregeleinrichtung (70) des Verbrennungsmotors (7) über eine Variation der Motorstellgröße Kraftstoffzufuhr oder Einspritzventilsteuerung oder Zündzeitpunkt oder Gemischzusammensetzung oder Luftzufuhr oder Nockenwellenverstellung oder Turboladersteuerung auf die jeweilige Motorführungsgröße geregelt wird.

4. Boot gemäß einem der vorstehenden Ansprüche, **dadurch gekennzeichnet, dass** die Generatorregeleinrichtung (60), die Motorregeleinrichtung (70) des Verbrennungsmotors und die Steuervorrichtung (8) in einem zentralen Controller integriert sind.

5. Boot gemäß einem der vorstehenden Ansprüche, **dadurch gekennzeichnet, dass** die Steuervorrichtung (8) in einer Datenbank (80) hinterlegte Werte für die Motorführungsgröße und Kennlinien für die Generatorführungsgröße umfasst und die Steuervorrichtung (8) der Motorregelungseinrichtung (70) einen hinterlegten Wert für die Motorführungsgröße und der Generatorregelungseinrichtung (60) einen aus einer Kennlinie abgeleiteten Wert für die Generatorführungsgröße vorgibt, bevorzugt einen Wert der Motorführungsgröße zum Betrieb der Verbrennungsmotors (7) bei maximaler Effizienz oder bei maximaler Leistung und/oder bevorzugt einen Wert der Generatorführungsgröße gemäß einer eine Batterieladekurve vorgebenden Kennlinie.

6. Boot gemäß einem der vorstehenden Ansprüche, **dadurch gekennzeichnet, dass** der Verbrennungsmotor (7) einen elektronischen Motorcontroller aufweist und die Motorregeleinrichtung (70) entsprechend mittels des elektronischen Motorcontrollers die Regelung des Verbrennungsmotors (7) vornimmt.

7. Boot gemäß einem der Ansprüche 1 bis 5, **dadurch gekennzeichnet, dass** der Verbrennungsmotor (7) einen mechanischen Drehzahlregler als Motorregeleinrichtung (70) aufweist und der mechanische Drehzahlregler von der Steuervorrichtung (8) eine Motorführungsgröße in Form einer Drehzahlvorgabe über einen Aktuator zur Verstellung des mechanischen Drehzahlreglers erhält.

8. Boot gemäß einem der vorstehenden Ansprüche, **dadurch gekennzeichnet, dass** der Gleichstromgenerator (6) als Startermotor für den Verbrennungsmotor (7) vorgesehen ist, wobei bevorzugt als Generatorführungsgröße eine Drehzahlvorgabe an die Generatorregeleinrichtung (60) übergeben wird und besonders bevorzugt nach Starten des Verbrennungsmotors (7) die Generatorführungsgröße beibehalten wird.

## Claims

1. Boat with an on-board system (1) comprising an on-board electrical system (100) with an electric motor (10) for driving the boat and a device (4) for providing electrical energy for an electrical consumer (10, 12) and/or for charging a battery, in particular a battery bank (2), wherein the device (4) comprises a combustion engine (7) with an engine control device (70) for controlling the combustion engine (7) and a direct current generator (6) coupled to the combustion engine (7) with a generator control device (60) for controlling the direct current generator (6), wherein a controller (8) is provided, which is configured to set an engine set point to the engine control device (70) and a generator set point to the generator control device (60),
in order to control the combustion engine (7) on the basis of the engine set point and the direct current generator (6) on the basis of the generator set point in a range independently of each other,
wherein the controller (8) is configured so as to determine, for a specified power range, an engine set point in the form of a constant speed setting on the basis of a power requirement from the on-board electrical system (100) and to increase the constant speed setting only if the specified power range is exceeded, and
wherein the controller (8) is configured so as to determine a generator set point in the form of a voltage setting, current setting or power setting on the basis of the power requirement from the on-board electrical system (100) at constant speed setting,
wherein the controller (8) sets the constant speed setting for the engine set point to the engine control device (70) and the voltage setting, current setting or power setting for the generator set point to the generator control device (60).

2. Boat according to claim 1, **characterised in that** the direct current generator (6) is an electronically commutated direct current generator and the generator control device (60) is configured to control the direct current generator (6) to the respective generator set point by means of a variation of the generator control variable generator torque or generator current or generator voltage or generator speed or generator power.

3. Boat according to claim 1 or 2, **characterised in that** the engine controller (70) of the combustion engine (7) is controlled to the respective engine set point by means of a variation of the engine control variable fuel supply or injection valve control or ignition timing or mixture composition or air supply or camshaft adjustment or turbocharger control.

4. Boat according to any one of the preceding claims, **characterised in that** the generator control device (60), the engine control device (70) of the combustion engine and the controller (8) are integrated within a central controller.

5. Boat according to any one of the preceding claims, **characterised in that** the controller (8) comprises values for the engine set point and characteristic curves for the generator set point that are stored in a database (80), and the controller (8) sets a stored value for the engine set point to the engine control device (70) and a value for the generator set point to the generator control device (60) that is derived from a characteristic curve, preferably a value of the engine set point for operating the combustion engine (7) at maximum efficiency or at maximum power and/or preferably a value of the generator set point according to a characteristic curve that specifies a battery charging curve.

6. Boat according to any one of the preceding claims, **characterised in that** the combustion engine (7) has an electronic engine controller and the engine control device (70) correspondingly controls the combustion engine (7) by means of the electronic engine controller.

7. Boat according to any one of claims 1 to 5, **characterised in that** the combustion engine (7) has a mechanical speed control device as engine control device (70) and the mechanical speed control device receives from the controller (8) an engine set point in the form of a speed setting, via an actuator for adjustment of the mechanical speed control device.

8. Boat according to any one of the preceding claims, **characterised in that** the direct current generator (6) is provided as starter motor for the combustion engine (7), a speed setting preferably being delivered to the generator control device (60) as generator set point, and particularly preferably the generator set point being retained after starting of the combustion engine (7).

## Revendications

1. Navire avec un système de bord (1) comprenant un réseau de bord (100) avec un moteur électrique (10) pour l'entraînement du navire et un dispositif (4) pour la fourniture d'énergie électrique pour un consommateur électrique (10, 12) et/ou pour le chargement d'une batterie, en particulier banc de batterie (2), dans lequel le dispositif (4) comporte un moteur à combustion interne (7) avec un dispositif de régulation de moteur (70) pour la régulation du moteur à combustion interne (7) et un générateur de courant continu (6) couplé au moteur à combustion interne (7) avec un dispositif de régulation de générateur (60) pour la régulation du générateur de courant continu (6), dans lequel un dispositif de commande (8) est prévu, lequel est conçu afin de prescrire au dispositif de régulation de moteur (70) une grandeur de guidage de moteur et au dispositif de régulation de générateur (60) une grandeur de guidage de générateur afin de réguler le moteur à combustion interne (7) sur la base de la grandeur de guidage de moteur et le générateur de courant continu (6) sur la base de la grandeur de guidage de générateur dans une plage indépendamment l'un de l'autre,
dans lequel le dispositif de commande (8) est conçu afin de fixer pour une plage de puissance déterminée une grandeur de guidage de moteur sous la forme d'une exigence de vitesse de rotation constante en raison d'une exigence de puissance du réseau de bord (100) et de n'augmenter l'exigence de vitesse de rotation constante que lorsque la plage de puissance déterminée est dépassée, et
dans lequel le dispositif de commande (8) est conçu afin de fixer une grandeur de guidage de générateur sous la forme d'une exigence de tension, d'une exigence de courant ou d'une exigence de puissance sur la base de l'exigence de puissance du réseau de bord (100) pour une exigence de vitesse de rotation constante,
dans lequel le dispositif de commande (8) prescrit au dispositif de régulation de moteur (70) l'exigence de vitesse de rotation constante pour la grandeur de guidage de moteur et au dispositif de régulation de générateur (60) l'exigence de tension, l'exigence de courant ou l'exigence de puissance pour la grandeur de guidage de générateur.

2. Navire selon la revendication 1, **caractérisé en ce que** le générateur de courant continu (6) est un générateur de courant continu commuté par voie électronique et le dispositif de régulation de générateur (60) est conçu afin de réguler le générateur de courant continu (6) par une variation de la grandeur de réglage de générateur couple de générateur ou courant de générateur ou tension de générateur ou vitesse de rotation de générateur ou puissance de générateur sur la grandeur de guidage de générateur respective.

3. Navire selon la revendication 1 ou 2, **caractérisé en ce que** le dispositif de régulateur de moteur (70) du moteur à combustion interne (7) est régulé par une variation de la grandeur de réglage de moteur fournie de carburant ou commande de soupape d'injection ou point d'allumage ou composition de mélange ou apport d'air ou réglage d'arbre à came ou commande de turbocompresseur sur la grandeur de guidage de moteur respective.

4. Navire selon l'une quelconque des revendications précédentes, **caractérisé en ce que** le dispositif de régulation de générateur (60), le dispositif de régulation de moteur (70) du moteur à combustion interne et le dispositif de commande (8) sont intégrés dans un dispositif de commande central.

5. Navire selon l'une quelconque des revendications précédentes, **caractérisé en ce que** le dispositif de commande (8) comporte des valeurs pour le grandeur de guidage de moteur et des lignes caractéristiques pour la grandeur de guidage de générateur enregistrées dans une base de données (80) et le dispositif de commande (8) prescrit au dispositif de régulation de moteur (70) une valeur enregistrée pour la grandeur de guidage de moteur et au dispositif de régulation de générateur (60) une valeur dérivée d'une ligne caractéristique pour la grandeur de guidage de générateur, de préférence une valeur de la grandeur de guidage de moteur pour le fonctionnement du moteur à combustion interne (7) pour une efficience maximale ou pour une puissance maximale et/ou de préférence une valeur de la grandeur de guidage de générateur selon une ligne caractéristique prescrivant une courbe de chargement de batterie.

6. Navire selon l'une quelconque des revendications précédentes, **caractérisé en ce que** le moteur à combustion interne (7) présente un dispositif de commande de moteur électronique et le dispositif de régulation de moteur (70) entreprend de manière correspondante au moyen du dispositif de commande de moteur électronique la régulation du moteur à combustion interne (7).

7. Navire selon l'une quelconque des revendications 1 à 5, **caractérisé en ce que** le moteur à combustion interne (7) présente un régulateur de vitesse de rotation mécanique comme dispositif de régulation de moteur (70) et le régulateur de vitesse de rotation mécanique reçoit par le dispositif de commande (8) une grandeur de guidage de moteur sous la forme d'une exigence de vitesse de rotation par le biais d'un actionneur de réglage du régulateur de vitesse de rotation mécanique.

8. Navire selon l'une quelconque des revendications précédentes, **caractérisé en ce que** le générateur de courant continu (6) est prévu comme moteur de démarrage pour le moteur à combustion interne (7), dans lequel de préférence comme grandeur de guidage de générateur une exigence de vitesse de rotation est transmise au dispositif de régulation de générateur (60) et de manière particulièrement préférée après le démarrage du moteur à combustion interne (7) la grandeur de guidage de générateur est conservée.
